# EUROPEAN PATENT APPLICATION

(11) **EP 4 844 626 A1**
(43) Date of publication of application: **25.11.2026**
(21) Application number: 26175874.2
(22) Date of filing: 30.04.2026
(51) Int. Cl.: G06F 40/30, G06F 40/284

(54) **TRAINING ENGINE(S) FOR TRAINING EMBEDDING MODELS USING PRE-TRAINED TRANSFORMER-BASED MODEL ATTENTION WEIGHTS**

(30) Priority: 22.05.2025 US 202519215562
(71) Applicant: Microsoft Technology Licensing, LLC, Redmond, WA 98052 (US)
(72) Inventor: SHAH, Shrey, Redmond, Washington, 98052 (US)
(74) Representative: CMS Cameron McKenna Nabarro Olswang LLP

(57) **Abstract**

Systems and methods herein provide a training engine and its related functions. In an aspect, a training engine may access a pre-trained large language model (LLM) with multiple layers and provide a set of domain-specific documents to the LLM. Responsive to submitting the set of domain-specific documents to the LLM, the training engine may extract attention weights from one or more layers of the LLM. Then, using the attention weights, the training engine may train an embedding model that is configured to generate vector representations for input text in the specific domain. The attention weights, which may be extracted from one or more intermediate layers of the LLM, may be used as supervision signals to train the embedding model through contrastive learning, allowing the embedding model to learn semantic relationships between text segments based on the LLM's understanding of the domain.

## Description

### TECHNICAL FIELD

Aspects of the disclosure are related to the field of computer software applications and services and, in particular, to training engines for training retrieval embedding models using attention weight analysis from pre-trained transformer-based models.

### BACKGROUND

Embedding models are becoming increasingly common in the digital era due to the growing need for systems that can understand and process unstructured data-particularly text-at scale. As search engines, recommendation systems, chatbots, and other AI-driven applications demand more nuanced semantic understanding, embedding models provide a powerful solution by transforming text into dense vector representations that capture meaning beyond simple keyword matching. Embedding models are key components in retrieval-augmented generation (RAG) architectures, where they facilitate the retrieval of semantically relevant documents used to inform and enhance the outputs of generative models. By enabling the integration of up-to-date or domain-specific information, embedding models increasingly play a role in improving the factual accuracy and contextual relevance of generated content.

### SUMMARY

Technology disclosed herein includes software applications and services that provide a training engine, and its related functions. In an aspect, a training engine is provided for training an embedding model using attention weights extracted from a pre-trained transformer-based model. To extract the attention weights from the pre-trained transformer-based model, the training engine may initially curate an input document set and submit it to the pre-trained transformer-based model. The pre-trained transformer-based model may include multiple intermediate layers that use attention weights during processing to generate an output responsive to receiving the input document set. As such, the training engine may identify one or more intermediate layers that contain attention weights representative of primary semantic relationships within the input documents. The training engine may then extract the attention weights from the one or more intermediate layers.

Responsive to extracting the attention weights, the training engine may use the attention weights to formulate a contrastive loss function. The contrastive loss function is applied to the embedding model such that one or more model parameters of the embedding model are iteratively adjusted through gradient descent optimization to minimize the contrastive loss. By modifying the model parameters to minimize the contrastive loss, the training engine tailors the embedding model to reflect the semantic relationships identified in the extracted attention weights without requiring the embedding model to replicate the full computational complexity of the pre-trained transformer-based model.

This Summary is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an operational environment for providing a training engine, according to an embodiment herein;
Figure 2 illustrates an example environment in which a training engine is leveraged for training an embedding model, according to various embodiments herein.
Figure 3 illustrates a process for providing a training engine and one or more of its functions, according to various embodiments herein.
Figure 4 illustrates an example environment in which a training engine leverages a large language model (LLM) to train an embedding model, according to various embodiments herein.
Figure 5 illustrates an example operational flow providing one or more functions of the training engine, according to various embodiments herein.
Figure 6 shows an example client device suitable for providing a training engine and related functions, according to an embodiment herein.

### DETAILED DESCRIPTION

An embedding model is a type of machine learning model that transforms discrete inputs-such as words, sentences, or entire documents-into continuous, dense vector representations in a high-dimensional space. These vectors are designed to capture the semantic relationships between inputs: items with similar meanings are mapped to nearby points in the embedding space. Embedding models are typically trained on large corpora using unsupervised or self-supervised learning techniques, optimizing the vectors so that they reflect patterns of co-occurrence and contextual similarity. Common embedding approaches include word2vec, GloVe, and transformer-based models like BERT, which generate contextual embeddings. These vector representations enable efficient similarity computation using measures like cosine similarity or dot product, making embedding models a core component in tasks such as information retrieval, semantic search, clustering, and recommendation systems.

Training high-quality embedding models, however, is notoriously challenging, largely due to the substantial data requirements involved. Traditional approaches, particularly those relying on supervised learning, demand large-scale labeled datasets to achieve meaningful semantic representations. Acquiring such datasets involves costly and time-intensive annotation processes, especially for domain-specific or multilingual tasks where expert input is often necessary. Even unsupervised or self-supervised methods, while reducing the dependency on explicit labels, still require access to vast and diverse corpora to ensure generalizability and robustness across varied linguistic contexts.

Another challenge of training embedding models lies in the contextual limitations of many embedding models, particularly smaller architectures or those with constrained context windows. These embedding models often struggle to capture long-range dependencies or subtle nuances within text, such as idiomatic expressions, polysemy, or discourse-level semantics. As a result, their embeddings may fail to accurately reflect the true meaning of complex or context-dependent inputs, leading to degraded performance in downstream retrieval or classification tasks. Addressing these limitations typically necessitates either architectural innovations or the use of larger models, both of which come with increased computational and resource costs.

In addition to data and context challenges, the training process for embedding models itself presents considerable complexity. Effective embedding models must learn to distinguish between semantically similar and dissimilar items, which requires the careful selection of positive and negative training examples. Techniques such as negative sampling and hard example mining are commonly employed to improve the discriminative power of embeddings. However, implementing these strategies effectively is non-trivial, often involving careful tuning of sampling distributions and training dynamics. Moreover, the computational overhead associated with mining hard negatives or maintaining large-scale similarity graphs can further complicate model training and scalability.

Due to the issues outlined above-namely extensive data requirements, contextual limitations, and training complexity-conventional approaches to training embedding models often produce suboptimal results while incurring significant development costs. These constraints not only hinder the quality and generalizability of the resulting embeddings but also limit the practical deployment of such models in real-world applications. The reliance on large annotated datasets restricts adaptability across domains and languages, while insufficient contextual modeling reduces the semantic fidelity of embeddings, particularly in complex or long-form text. Moreover, the computational demands of advanced training techniques such as negative sampling and hard example mining make iterative experimentation and large-scale deployment prohibitively resource-intensive. Collectively, these challenges highlight the need for more efficient and context-aware training methodologies to overcome the limitations of conventional embedding model pipelines.

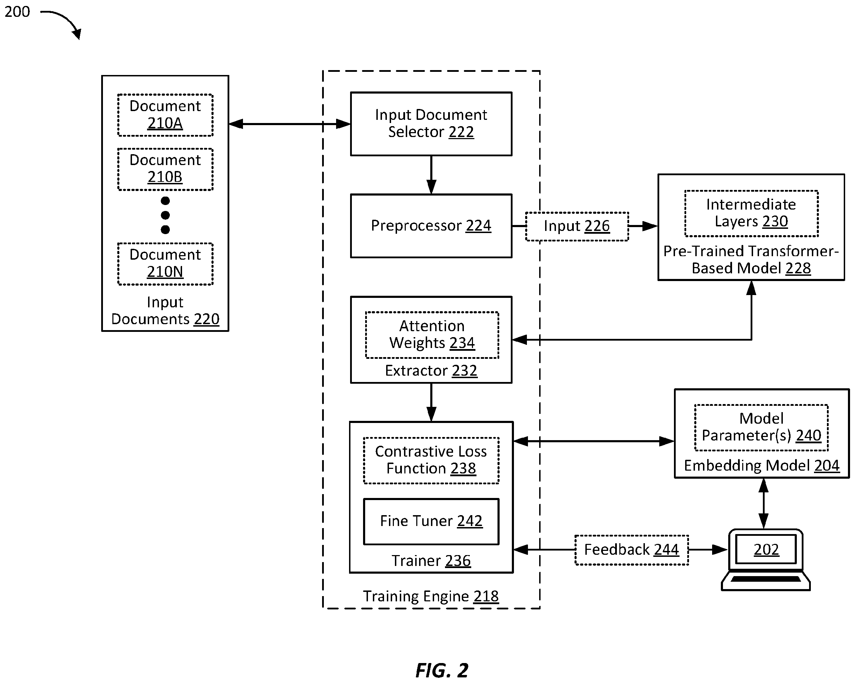

To address at least these shortcomings of conventional training frameworks, example training engine(s) are provided herein. In particular, the training engine provided herein may train an embedding model by leveraging the contextual understanding of a pre-trained transformer-based model, such as a large language model (LLM), to generate high-quality embeddings for specific domains with minimal manual input. As described in greater detail with respect to Figures 2-5, the training engine may curate a set of input documents and process them using a pre-trained transformer-based model (hereinafter "the pre-trained model"). During this processing, the training engine may extract attention weights from one or more intermediate layers of the pre-trained model. These attention weights may represent the pre-trained model's learned understanding of semantic relationships within the input text.

The training engine may select specific intermediate layers for extracting attention weights based on their position within the pre-trained model's architecture. This selection process may enhance the accuracy and relevance of the extracted attention weights. The training engine may leverage empirical observations indicating that certain intermediate layers capture rich semantic information corresponding to the input documents without being overly specific to the pretrained model's overall task, such as text summarization. In some embodiments, the training engine may focus on layers positioned between the 25th and 50th percentile of the total layers in the pre-trained model. In some implementations, the focus may be narrowed to layers between the 10th and 30th percentile. This targeted approach allows the training engine to leverage the most informative intermediate layers for extracting semantic relationships, thereby improving the overall performance of embedding model trained on the extracted attention weights.

Responsive to extracting the attention weights from the pre-trained model's intermediate layer(s), the training engine may use the attention weights to train the embedding model. In particular, the training engine may use the attention weights to train the embedding model to be domain specific (e.g., trained on a specific data or subject matter domain). To train the embedding model, the training engine may formulate a contrastive loss function based on the extracted attention weights. A contrastive loss function is a training mechanism that encourages a machine learning model, such as the embedding model, to learn representations where semantically similar inputs (as identified by high attention weights) are mapped to nearby points in the embedding space, while dissimilar inputs are mapped to distant points. By creating this contrast between positive pairs (similar items) and negative pairs (dissimilar items), the training engine teaches the embedding model to distinguish between related and unrelated content within the specific domain.

During the training process, the training engine may submit the input documents into the embedding model to generate initial embeddings, then adjusts the model parameters to minimize differences between similarity scores computed from these generated embeddings and the extracted attention weights. The attention weights thus serve as supervision signals, guiding the embedding model to learn semantic relationships that align with the pre-trained model's understanding of the domain. This approach enables the creation of lightweight, domain-specific embedding models that capture the rich semantic understanding of larger transformer-based models while requiring significantly fewer computational resources.

In some embodiments, in addition to the attention weights extracted from the pre-trained model, the training engine may fine tune the embedding model's semantic relationships between various concepts. For example, after an initial training, the training engine may collect user feedback on the relevance of documents retrieved using the trained embedding model. The training engine may then adjust model parameters of the embedding model to more heavily weight this user feedback compared to the attention weights retrieved from the pre-trained model. This fine-tuning process allows the embedding model to adapt to specific user needs and preferences within the domain.

The training engine provided herein offers numerous technical advancements over conventional methods for developing and training embedding models. By leveraging the contextual representations inherent in large pre-trained models and utilizing attention weight extraction, the training engine improves the process of generating domain-specific embeddings. That is, the training engine minimizes reliance on extensive labeled datasets and manual feature engineering, thereby substantially reducing training time, human intervention, and computational overhead typically associated with training embedding models for specialized tasks. As a result, high-quality, domain-adapted embedding models can be produced more efficiently, accelerating the integration of semantic search and retrieval functionalities across diverse application areas.

Additionally, the ability to generate lightweight, domain-specific embedding models presents key technical advantages in terms of model size, inference speed, and deployment flexibility. The embedding models generated by the training engine require significantly fewer computational resources compared to conventional transformer-based architectures, enabling execution on edge devices, mobile platforms, and other resource-constrained environments without sacrificing domain-relevant semantic accuracy. This efficiency broadens the operational scope of natural language processing applications that leverage embedding models, allowing advanced semantic understanding and retrieval capabilities to be deployed in scenarios where traditional large-scale models would be impractical due to hardware limitations or latency constraints. Moreover, by reducing the complexity of the embedding models, the training engine also contributes to lower energy consumption and improved scalability across distributed systems.

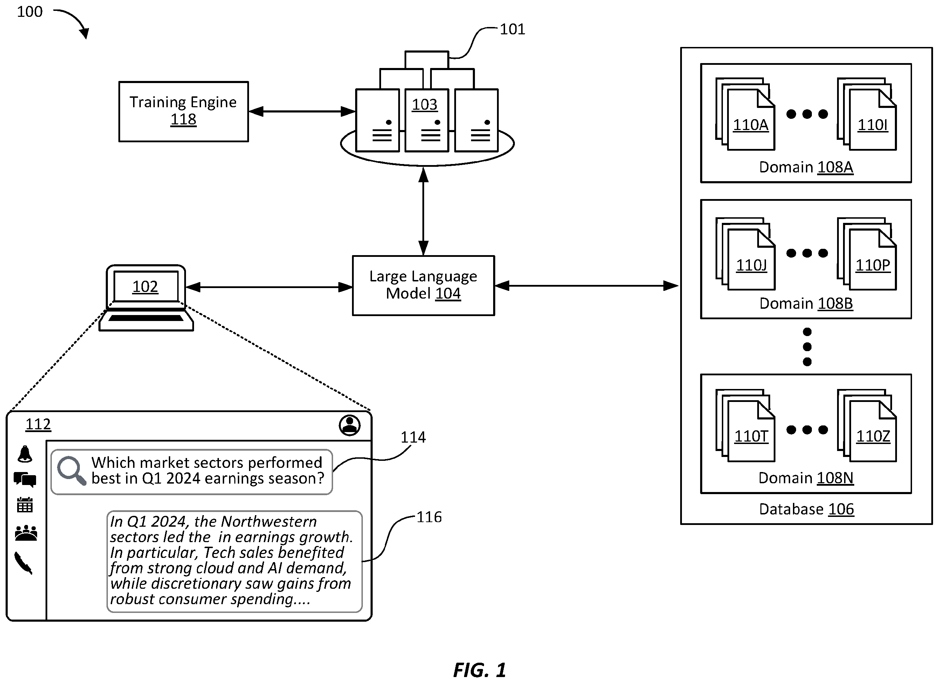

Turning now to **Figure 1****,** an environment 100 is illustrated that facilitates interaction between a client device 102 and a pre-trained transformer-based model (hereinafter "the model") 104 hosted by an application service 101, according to various embodiments. As shown, the environment 100 includes the application service 101 and at least one client device 102. A user operating the client device 102 may access the application service 101 to interact with the model 104. For example, the model 104 may be integrated as a chatbot to provide interactive assistance, answer queries, or offer support. In other implementations, the model 104 may be deployed in an enterprise context to enable domain-specific tasks such as content generation, knowledge retrieval, or business workflow automation.

The application service 101 includes one or more server computers 103, which provide the computational, storage, and networking infrastructure required to deploy and operate the model 104. These server computers 103 may be implemented using physical hardware, virtual machines, or cloud-based instances, and are configured to receive and process requests from client devices 102. Upon receiving a request, the server computers 103 perform inference operations using the model 104 and return a contextually appropriate response. The model 104 may be made accessible to the client devices 102 through standardized communication interfaces such as RESTful APIs, WebSockets, or application-specific protocols. The server computers 103 also manage session states, enforce authentication and access controls, and distribute workloads to ensure system scalability, availability, and low-latency interaction between the application service 101 and the client devices 102.

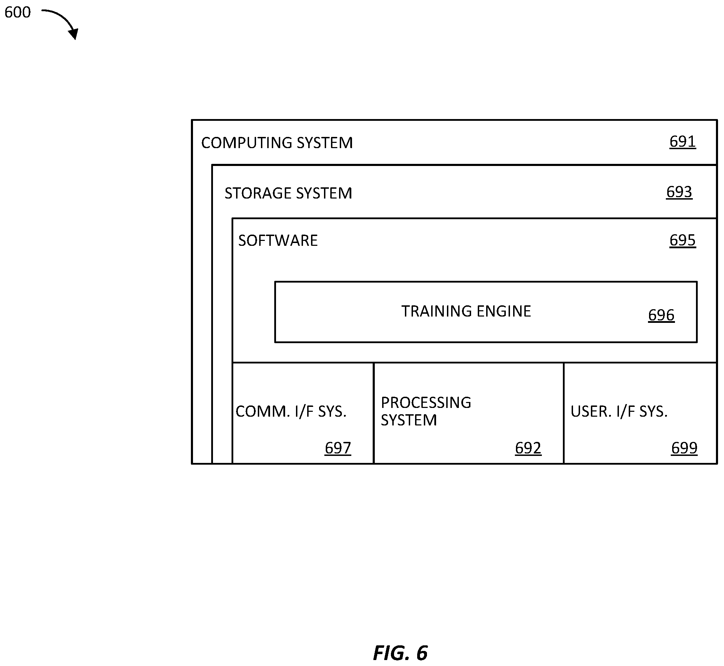

The client device 102 may include a wide range of computing and communication devices, such as personal computers, tablets, smartphones, gaming consoles, wearable devices, Internet of Things (IoT) devices, and other network-enabled hardware. The client device 102 may be in operable communication with the application service 101 via one or more communication networks, including local area networks (LANs), wide area networks (WANs), cellular networks (e.g., 4G/5G), Wi-Fi, or the Internet. This connectivity enables the client device 102 to transmit natural language inputs to the application service 101 and receive generated outputs from the model 104. Communications may occur over secure and authenticated channels to ensure data integrity, confidentiality, and reliable exchange. As further depicted in Figure 6, computer system 691 is broadly representative of both the client device 102 and the server computers 103, illustrating a generalized computing architecture that includes processors, memory, storage, and communication interfaces. These components may be configured differently based on whether the system is operating in a client or server role within the environment 100.

The model 104 may be a pre-trained large language model, trained on a broad corpus of text data to learn statistical patterns of language, thereby enabling advanced natural language understanding and generation capabilities. As used herein, the term "model" is intended to encompass not only a singular model but also sub-models, model systems, and mixtures of experts. A model system, such as the model 104, may consist of multiple interdependent models working collaboratively, such as a mixture of experts framework where distinct models specialize in specific tasks or domains and are selectively invoked based on the input context. This broader interpretation allows the model 104 to function as a dynamic, adaptable system capable of leveraging multiple knowledge sources and specialized reasoning pathways.

In some embodiments, the model 104 may include a base model capable of generating fluent and coherent text, generated responses may be enhanced for domain-specific or enterprise applications through the implementation of a retrieval-augmented generation (RAG) framework. In this approach, when the model 104 receives a user query, it supplements its generative process by retrieving contextually relevant information from an external knowledge source-such as a document repository, database, or search index. This retrieved content is incorporated into the input prompt or attention context during inference, enabling the model 104 to produce responses that are grounded in up-to-date or domain-specific knowledge. This hybrid architecture combines the fluency of generative modeling with the factual precision of information retrieval systems, thereby improving response quality and reducing the risk of hallucination.

As shown in Figure 1, the model 104 may be in operable communication with a database 106, which serves as the external knowledge source supporting the RAG workflow. To enable semantic search and retrieval, the model 104 may include or interface with an embedding model that transforms both user queries and documents within the database 106 into high-dimensional vector representations. These vectors exist within a shared semantic space, allowing for efficient similarity matching. When a user query is received, the embedding model encodes the query and compares it to precomputed embeddings of stored documents, retrieving those that are most relevant to the query's intent.

The database 106 may be logically structured into multiple domains 108A-108N, each representing a distinct area of subject matter expertise. These domains support targeted retrieval and may contain respective corpora of documents 110A-110Z, which can include unstructured content (e.g., technical manuals, emails, policy documents), semi-structured formats (e.g., XML, JSON), or structured data (e.g., tables, metadata). Each domain 108A-N may be tailored to a specific topic-such as legal, medical, financial, scientific, or operational knowledge-depending on the application service's 101 intended use cases. Although the domains 108A-108N are illustrated as being part of a single database 106, it should be appreciated that, in other embodiments, one or more of the domains 108A-108N may reside in separate, independently managed databases 106 to support scalability, security, or organizational data segregation requirements.

In an illustrative example, a user of the client device 102 may utilize a user interface 112 to submit a prompt query 114 to the model 104. Upon receiving the prompt query 114, the embedding model within the model 104 generates a corresponding query vector, which is then used to search across the vectorized documents within the database 106. The embedding model within the model 104 identifies the most semantically relevant documents across one or more domains 108A-108N based on vector similarity metrics. These retrieved documents 110A-110Z are incorporated into the prompt context and provided as input to the model 104. The model 104 then generates a response 116, which reflects not only its pre-trained generative capabilities but also the contextual grounding derived from the retrieved documents. Once the response 116 is generated, it is transmitted back to the client device 102 and presented to the user via the user interface 112. The user interface 112 may render the response as part of a conversational thread, a dynamic content field, or an interactive element within an application, depending on the implementation. This end-to-end interaction enables the user to receive a coherent, accurate, and contextually informed response in real time, completing the retrieval-augmented generation cycle.

Implementing a RAG workflow in the model 104, however, introduces several technical challenges, particularly related to the training and operation of embedding models used for semantic retrieval. Embedding models must generate high-dimensional vector representations that accurately capture the nuanced semantic relationships within both user queries and large document corpora. Achieving this level of precision typically requires training on vast, domain-relevant datasets, leveraging substantial computational resources such as high-memory graphics processing units (GPUs), tensor processing units (TPUs), and distributed training infrastructures. Additionally, to maintain high retrieval accuracy over time, embedding models often require continuous fine-tuning or periodic retraining as the underlying document corpus evolves, introducing further computational overhead. Even during inference, real-time vectorization of queries and similarity searches across expansive vector indexes place significant demands on memory, storage, and processing power, while also impacting system latency. These technical constraints become particularly pronounced in enterprise environments, where low-latency performance, high query throughput, and responsiveness to dynamic content updates across multiple domains are common operational requirements.

Beyond technical considerations, there are also practical and implementation challenges associated with training embedding models for domain-specific applications. One of the primary obstacles is the need for large, high-quality, and often labeled datasets tailored to each specific domain 108A-108N. Curating such datasets typically involves extensive manual effort, requiring subject matter expertise to identify, preprocess, and annotate relevant documents. This data preparation phase can span weeks or even months, depending on the complexity, sensitivity, and breadth of the targeted subject matter. Furthermore, aligning the embedding space to accurately reflect domain-specific semantics often necessitates iterative experimentation, hyperparameter tuning, and validation cycles, further extending development timelines. As a result, the time- and resource-intensive nature of embedding model training can delay, sometimes significantly, deployment, limiting the agility of organizations to leverage embedding-enhanced LLMs 104 in fast-paced or rapidly evolving business environments where timely access to domain-specific insights is needed.

To address these challenges and streamline the process of training embedding models, an example training engine 118 is provided herein. As will be expanded on in greater detail below, the training engine 118 may leverage the rich contextual understanding of a pre-trained transformer model, such as the model 104, to train a domain-specific embedding model. For example, in some embodiments, the training engine may submit a set of input documents into the model 104 and responsively extract attention weights from one or more intermediate layers of the model 104. The attention weights may encode the LLM's 104 learned representation of semantic relationships within the input text. Accordingly, these attention weights can be indicative of the LLM's 104 internal assessment of semantic similarity and dissimilarity across different segments or documents. The training engine 118 may utilize these extracted attention weights to inform the training of the embedding model, thereby enabling the identification of semantically similar or dissimilar content without the need for manual annotation or supervision. Accordingly, the training engine 118 autonomously captures semantic information encoded by the model 104, eliminating the need for manual intervention in defining semantic relationships within the input documents. This automation significantly reduces the time and effort typically required for data labeling or rule-based configuration, thereby accelerating the training process and enabling more efficient development of domain-specific embedding models with consistent and high-quality semantic representation.

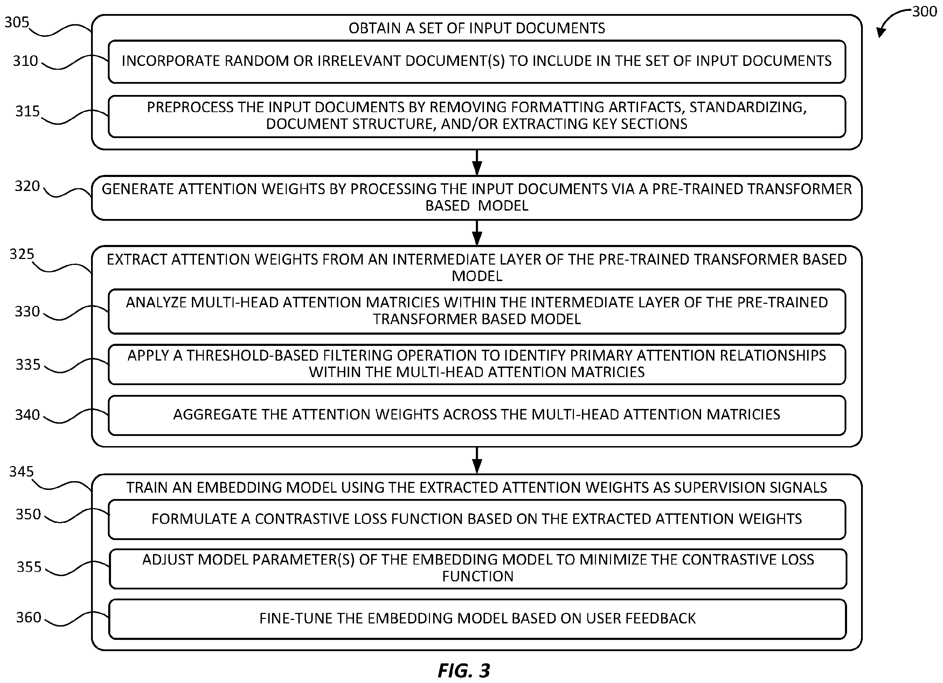

Turning now to **Figure 2****,** an example environment 200 in which a training engine 218 is leveraged for training an embedding model 204 is illustrated, according to an embodiment herein. For ease of explanation, Figure 2 is described with reference to **Figure 3****,** which illustrates a process 300 for providing a training engine and one or more of its functions, according to an embodiment herein. While Figure 3 is described in relation to Figure 2, it should be appreciated that the process 300 is equally applicable to the remaining figures and components therein.

As noted above, the training engine 218 may be utilized to train the embedding model 204. As noted above, the term "model" is intended to broadly encompass not only a single model but also sub-models, model systems, and mixtures of experts. As such, the embedding model 204 may include a single model, a multimodal system, a system of models, a chain of models, or any other combination of interconnected models, collectively referred to as an AI system. In the illustrated example, the embedding model 204 may be one such model or model system, operating as a type of neural network or machine learning model designed to transform high-dimensional data-such as text, images, or other structured inputs-into dense, low-dimensional vector representations, known as embeddings. These embeddings capture semantic relationships and contextual similarities between inputs in a form that is computationally efficient for downstream tasks. In certain implementations, the embedding model 204 may function as a retrieval-based model, enabling efficient similarity search or nearest-neighbor retrieval within a vector space.

In certain implementations, the embedding model 204 may function as a component of a broader model system, which may include chains of models, model delegation, and reasoning models. For example, the embedding model 204 may operate as a retrieval-based model, enabling efficient similarity search or nearest-neighbor retrieval within a vector space. Additionally, it may be configured to collaborate with other models, including LLMs, to perform complex tasks through model delegation, where specialized models are invoked to handle specific subtasks.

In some embodiments, the embedding model 204 may function as a component within a broader machine learning system, such as being integrated into an LLM architecture, such as part of the model 104. In this configuration, the model 104 may facilitate tasks like information retrieval, semantic search, and/or context encoding to enhance the performance of the LLM in generating relevant and contextually appropriate outputs. For example, the embedding model 204 may be employed in Retrieval-Augmented Generation (RAG) operations, where it encodes queries and retrieves relevant external knowledge from a vector database to supplement the LLM's responses with factual, up-to-date, and/or domain-specific information. This process may involve model delegation, where the embedding model 204 focuses on retrieval and encoding, while the LLM focuses on text generation. Similarly, in chatbot applications, the embedding model 204 may enable semantic search across a knowledge base or conversation history, allowing the chatbot to retrieve contextually relevant information and provide coherent, informed, and context-aware responses.

To generate meaningful embeddings, the training engine 218 may obtain a set of input documents 220 (305) to train the embedding model 204 to distinguish between semantically related and unrelated content. In particular, the training engine 218 may include an input document selector 222 that curates the input documents 220 to include similar subject matter or related text, such as documents 210A-B from a specific domain like domain 108A. In some embodiments, the documents 210A-N may be technical manuals, research papers, legal contracts, financial reports, medical records, policy documents, user guides, academic articles, news articles, blog posts, emails, or social media content, while in other cases, the documents 210A-N may be segments of content, such as a paragraph, section, chapter, abstract, executive summary, or conclusion. In yet other embodiments, the documents 210A-N may include visual or audio content, such as images, audio clips, videos, diagrams, charts, graphs, infographics, presentations, animations, 3D models, augmented reality content, virtual reality scenes, speech recordings, podcasts, webinars, music, sound effects, or any combination thereof. The documents 210A-N may also include multimodal content that combines text with one or more of these other content types, enabling the embedding model to learn representations across different modalities.

In some embodiments, the input document selector 222 may incorporate one or more random or irrelevant documents, such as document 210N, into the set of input documents 220 (310). These irrelevant or random documents may serve as negative samples that are semantically dissimilar to the domain-specific documents. By including negative samples in the input documents 220, the training engine 218 creates contrastive examples that may aid the pre-trained transformer-based model 228 in distinguishing between semantically related and unrelated content. Specifically, these negative samples enable the pre-trained transformer-based model 228 to generate attention weights with greater contrast between relevant and irrelevant content, thereby providing clearer supervision signals for training the embedding model 204, as described in greater detail below. The input document selector 222 may select negative samples (e.g., the random or irrelevant documents) by using either random sampling techniques or hard negative mining, where challenging examples that are syntactically similar but semantically distinct are identified through cosine similarity thresholding in the embedding space.

In some embodiments, once the set of input documents 220 is selected, the training engine 218 may preprocess the input documents 220 (315). In particular, the training engine 218 may include a preprocessor 224 that processes the input documents 220 to generate an input 226 for submission into the pre-trained transformer-based model 228. The preprocessor 224 may perform several operations to prepare the input documents 220, including removing formatting artifacts, standardizing document structure, and tokenizing the text into appropriate units compatible with the pre-trained transformer-based model's 228 input requirements. The preprocessor 224 may also normalize text, remove or replace personally identifiable information, and truncate or segment long documents to fit within the pre-trained transformer-based model's 228 maximum sequence length. Additionally, the preprocessor 224 may add special tokens required by the pre-trained transformer-based model 228, convert the processed text into numerical representations using the pre-trained transformer-based model's 228 vocabulary, and pad or batch the processed documents to ensure consistent input sizes. Optionally, the preprocessor 224 may extract and preserve metadata that may be relevant for downstream tasks. These preprocessing steps help ensure that the input 226 is clean, consistent, and optimally formatted for the pre-trained transformer-based model 228, potentially improving the quality of the attention weights extracted in subsequent steps.

Using the input documents 220, which may be preprocessed, the training engine 218 may prepare the input 226 and submit it to the pre-trained transformer-based model 228 to generate one or more attention weights 234 based on the input documents 220 (320). That is, the training engine 218 may submit the input documents 220 as an input 226 into the pre-trained transformer-based model 228 for processing. As the pre-trained transformer-based model 228 processes the input documents 220, the model 228 may leverage its pre-trained architecture to extract contextual relationships, semantic meaning, and syntactic structure from the input 226 by dynamically computing attention across tokens within the input documents 220.

The pre-trained transformer-based model 228 may be a deep learning model configured to process sequential data, such as text, using a multi-layered transformer architecture. The pre-trained transformer-based model 228 may be pre-trained on large-scale datasets to learn generalized language representations through objectives such as masked language modeling or autoregressive prediction. This pre-training enables the pre-trained transformer-based model 228 to perform complex language understanding tasks without requiring task-specific retraining. Upon receiving the input 226, the pre-trained transformer-based model 228 utilizes its learned parameters to interpret and encode the input documents 220 into rich, contextualized representations.

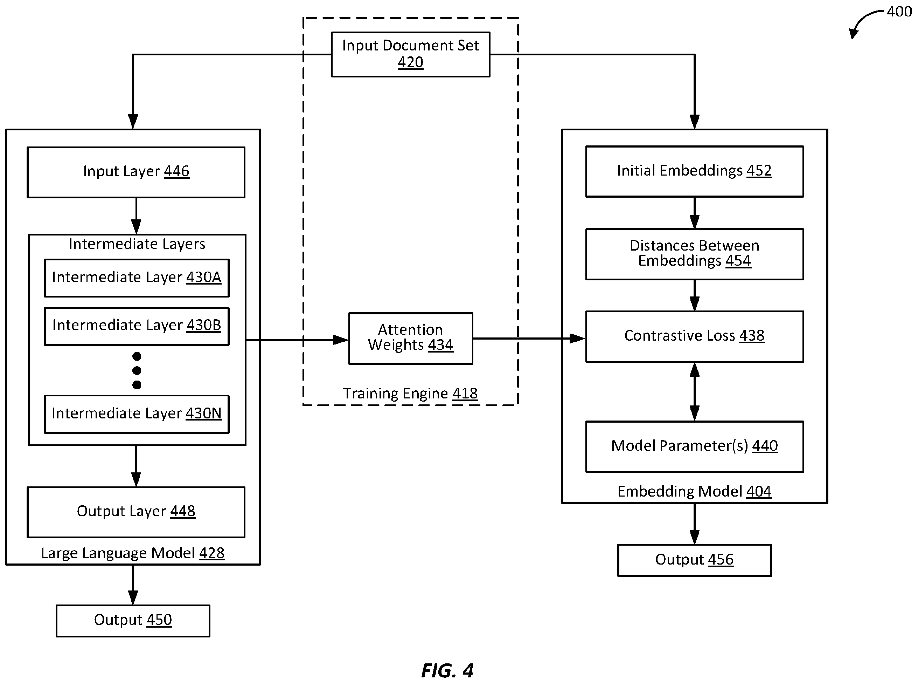

As will be described in greater detail below with respect to Figure 4, the architecture of the pre-trained transformer-based model 228 includes a series of layers, including an input embedding layer, multiple intermediate layers 230, and an output layer. Each intermediate layer 230 contains components such as multi-head self-attention mechanisms and feedforward neural networks. As the input 226 is processed, it may initially be tokenized and mapped into dense vector embeddings, with positional encodings applied to preserve token order. These embeddings are then propagated through the stacked intermediate layers 230, where each layer 230 incrementally refines the representation of the input by attending to relevant contextual information.

As part of this process, the transformer-based model 228 generates attention weights 234 within each intermediate layer 230. These attention weights 234 are computed by forming query, key, and value vectors for each token and applying a scaled dot-product attention mechanism. The attention weights 234 determine the relative importance of other tokens in the sequence when updating a token's representation. The use of multi-head attention allows the pre-trained transformer-based model 228 to capture diverse contextual relationships simultaneously across different subspaces. Through successive intermediate layers 230, the attention-driven processing enables the pre-trained transformer-based model 228 to develop a deep, hierarchical understanding of the input documents 220, facilitating accurate downstream interpretation and task execution.

In some embodiments, the input 226 may include a prompt or instructions as to how the pre-trained transformer-based model 228 should process the input documents 220. For example, the prompt may direct the pre-trained transformer-based model 228 to summarize the input documents 228. In general, including a prompt in the input 226 may minimally affect the attention weights 234 generated by the pre-trained transformer-based model 228, as these attention weights 234 primarily reflect the pre-trained transformer-based model's 228 learned understanding of semantic relationships. However, tailored prompting techniques may be strategically employed to influence the generation of attention weights 234 in ways that enhance the training of the embedding model 204 for specific domains or tasks. For example, a prompt directing the pre-trained transformer-based model 228 to "Compare and contrast the main themes in documents 210A and 210B" may encourage the generation of attention weights 234 that highlight semantic relationships between key concepts across the input documents 220. This type of prompt may lead to attention patterns that emphasize cross-document connections, potentially resulting in embeddings that better capture thematic similarities and differences. In another instance, a prompt such as "Identify the most important technical specifications in these product descriptions" may guide the pre-trained transformer-based model 228 to focus its attention on specific types of information, potentially yielding attention weights 234 that are particularly relevant for training embedding models 204 specialized in technical document retrieval or comparison tasks.

During or subsequent to the pre-trained transformer-based model 228 processing the input 226, the training engine 218 may extract the attention weights 234 from one or more intermediate layers 230 (325). Specifically, the training engine 218 includes an extractor 232 that extracts the attention weights 234 from selected intermediate layers 230 of the pre-trained transformer-based model 228. The choice of intermediate layer 230 from which the attention weights 234 are extracted may influence, sometimes significantly, the accuracy and efficacy of the attention weights 234 in representing semantic relationships within the input documents 220. To enhance this selection, the extractor 232 may analyze the intermediate layers 230 to identify those that best capture semantic relationships relevant to the concepts in the input documents 220.

In example embodiments, the extractor 232 may focus on intermediate layers 230 between the 25th and 50th percentile of the total layers in the pre-trained transformer-based model 228, as these intermediate layers 230 often exhibit a balance between general language understanding and task-specific features. In some implementations, the extractor 232 may narrow this range to intermediate layers 230 between the 10th and 30th percentile, which may capture more generalizable semantic relationships identified within the input documents 220. The extractor 232 may employ various techniques to assess the quality of attention weights from different layers, such as measuring the entropy of attention distributions or evaluating the alignment of attention patterns with known semantic structures in the input documents 220. This careful selection process helps ensure that the extracted attention weights 234 provide the most informative signals for training the embedding model 204 in subsequent steps.

In some embodiments, to extract the attention weights 234, the extractor 232 may analyze the multi-head attention matrices within the selected intermediate layer 230 (330). The multi-head attention matrices contain numerical values indicating how much each token attends to every other token during the model's 228 processing. The extractor 232 may analyze these multi-head attention matrices by first identifying the most significant attention connections through statistical analysis of the attention distribution. For example, the extractor 232 may apply a threshold-based filtering operation to identify primary attention relationships within the multi-head attention matrices (335).

The threshold used for identifying primary attention relationships within the multi-head attention matrices may be adaptively determined based on the statistical distribution of attention values within the matrices. For example, a percentile-based approach (e.g., selecting the top 10-15% of attention weights) or a Gaussian mixture model may be applied to identify significant outliers. In some embodiments, the extractor 232 may implement dynamic thresholding by calculating the mean (µ) and standard deviation (σ) of the attention weights distribution, then setting the threshold at µ + kσ, where k is a configurable hyperparameter typically between 1.5 and 3.0. In other embodiments, the extractor 232 may employ kernel density estimation to identify natural separation points between high and low attention regions, allowing for dynamic adjustment to different input characteristics and varying attention patterns across different document or content types.

Following the filtering step, the extractor 232 may aggregate the attention weights 234 across the multi-head attention matrices (340). In some cases, aggregation may include computing a weighted average across attention heads, with weights determined based on the relative importance or informativeness of each head as measured by entropy or variance metrics. In other implementations, aggregation may involve selective combination of attention patterns from specific heads that demonstrate high correlation with semantic relationships. During this aggregation process, the extractor 232 may normalize the attention values to account for varying magnitudes across different heads, ensuring consistent scaling in the final attention weights 234. This normalization may be performed using techniques such as min-max scaling, z-score standardization, or softmax transformation to maintain relative relationships while bringing values into a comparable range.

Responsive to extracting the attention weights 234, the training engine 218 may use the extracted attention weights 234 to train the embedding model 204 (345). In particular, the training engine 218 may include a trainer 236 that trains the embedding model 204 using the extracted attention weights 234 as supervision signals. To train the embedding model 204, the trainer 236 may formulate a contrastive loss function 238 based on the extracted attention weights (350). As noted above, a contrastive loss function 238 is a training mechanism that encourages the embedding model 204 to generate vector representations where semantically similar inputs (as identified by high attention weights) are mapped to nearby points in the embedding space, while dissimilar inputs are mapped to distant points. The trainer 236 may adjust one or more model parameters 240 of the embedding model 204 to minimize the contrastive loss function 238 (355), thereby enhancing the embedding model's 204 ability to capture semantic relationships present in the input documents 220. In this manner, the trainer 236 leverages the rich contextual understanding encoded in the attention weights 234 from the pre-trained transformer-based model 228 without requiring the embedding model 204 to undergo the same computational complexity and manually intense training process as the pre-trained transformer-based model 228.

In some embodiments, the trainer 236 may also leverage feedback 244 from users when the embedding model 204 is employed after the initial training process. That is, the trainer 236 may include a fine-tuner 242 that may periodically fine-tune the embedding model 204 based on user feedback 244 after the initial training process (360). For example, when a user, such as via the client device 202, interacts with the embedding model 204 such as to submit a search query, the training engine 218 may present one or more retrieved documents responsive to the search query and prompt the user to rate or indicate the relevance of each retrieved document. The training engine 218 may display a rating interface with, for example, options such as "highly relevant," "somewhat relevant," "not relevant," or a numerical scale from 1-5 to collect the feedback 244. This feedback 244 is then processed by the fine-tuner 242, which may adjust the model parameters 240 to more heavily weight user feedback 244 compared to the attention weights 234 retrieved from the pre-trained transformer-based model 228. Specifically, the fine-tuner 242 may implement a weighted loss function that incorporates both the original contrastive loss function 238 and an additional component based on user relevance judgments, with a configurable parameter that increases the importance of user feedback 244 over time as more feedback data is collected. This adaptive fine-tuning process enables the embedding model 204 to continuously improve its performance based on real-world usage patterns and domain-specific requirements identified through user interactions.

Referring now to **Figure 4****,** an example operational flow 400 in which a training engine 418 leverages a pre-trained transformer based model 428 to train an embedding model 404 is illustrated, according to various embodiments herein. As shown, the training engine 418, which may be the same or similar to the training engine 218, may curate a set of input documents 420 and submit the input documents 420 to the model 428. Simultaneously, or substantially simultaneously, the training engine 418 may also submit the input document set 420 to the embedding model 404, which may be the same or similar to the embedding model 204. The following discussion may first focus on the model 428 and then describe the embedding model 404, however, it should be appreciated that one or more of the following steps or functions may be occurring near simultaneously such that the training engine 418 can leverage outputs from both the model 428 and the embedding model 404 to facilitate the training process.

As noted above, the model 428 may include various layers, including an input layer 446, an output layer 448, and multiple intermediate layers 430A-N. The input layer 446 receives the input document set 420 and transforms the raw text into numerical representations or embeddings that can be processed by the model 428, typically applying tokenization and initial embedding operations to convert words or subwords into dense vector representations. The intermediate layers 430A-N then process these representations through a series of self-attention mechanisms and feed-forward neural networks, progressively refining the contextual understanding of the input document set 420 by capturing relationships between different tokens and developing increasingly abstract representations of the semantic content. Finally, the output layer 448 takes the processed representations from the final intermediate layer and generates an output 450, which may include probabilities across the vocabulary for next-token prediction or other task-specific outputs depending on how the model 428 was pre-trained.

It should be appreciated that the illustrated model 428 may be simplified for illustrative purposes. As such, the model 428 may broadly encompass not only a single model but also sub-models, model systems, and mixtures of experts. This may include single models, multimodal systems, systems of models, chains of models, or other combinations of interconnected models, collectively referred to as an AI system. For instance, the model 428 may operate as part of a larger model system that incorporates multiple specialized sub-models, each responsible for distinct aspects of processing, such as language understanding, knowledge retrieval, or reasoning. Such a model system may leverage chain-of-thought processes, model delegation, or reasoning models, enabling complex problem-solving capabilities. As noted above, the training engine 418 may analyze the intermediate layers 430A-N as the model 428 processes the input document set 420 to identify an intermediate layer that captures a primary semantic relationship between concepts within the input document set 420. To identify this optimal or preferred intermediate layer, the training engine 418 employs a systematic evaluation process that includes analyzing the entropy distribution of attention weights across multiple layers 430A-N, measuring the correlation between attention patterns and known semantic structures, and quantifying the information density at each layer. The training engine 418 may compute layer-specific metrics such as attention entropy, semantic coherence scores, and cross-token mutual information to determine which intermediate layer provides the most generalizable semantic relationships.

As noted above, the training engine 418 may analyze the intermediate layers 430AN as the model 428 processes the input document set 420 to identify a target intermediate layer 430A-N for extracting attention weights 434. In some embodiments, the training engine 418 may select intermediate layers 430A-N based on their relative position within the model's 428 architecture, with intermediate layers 430A-N positioned between the 25th and 50th percentile of the LLM's total depth often exhibiting an optimal or preferred balance between capturing domain-specific semantic relationships while avoiding overfitting to the model's 428 specific pre-training objectives. In some implementations, the training engine 418 may further refine this selection by focusing on intermediate layers 430A-N between the 10th and 30th percentile, which typically encode rich contextual information before the representations become too task-specific in deeper layers.

Once the target intermediate layer 430A-N is identified, the training engine 418 extracts the corresponding attention weights 434 from that layer. This extraction may involve accessing the multi-head attention matrices produced during the forward pass of the input document set 420 through the model 428. As described above, the attention weights 434 capture the learned dependencies between tokens or segments within the input document set 420. As part of the extraction process, the training engine 418 may normalize the attention values for consistent scaling, apply statistical thresholds to filter out low-significance attention scores, and aggregate attention patterns across multiple heads to generate a consolidated representation of semantic relationships identified by the model 428. As such, the extracted attention weights 434 function as supervisory signals for training the embedding model 404, providing contextual insights learned by the model 428 while avoiding the need for the embedding model 404 to replicate the full computational complexity of the model 428.

On the embedding model 404 side, responsive to submission of the input document set 420, the embedding model 404 generates initial embeddings 452. That is, the embedding model 404 processes each document in the input document set 420 through its neural network architecture, transforming the text into dense vector representations in a high-dimensional space (e.g., embeddings 452). These initial embeddings 452 capture semantic features of the input documents 420 based on the current state of the model parameters 440. Once the initial embeddings 452 are generated, the embedding model 404 computes distances 454 between the embeddings 452 using similarity metrics such as cosine similarity or Euclidean distance. The distance 454 calculations quantify the semantic relationships between different input documents 420 or the content within the documents 420 in the embedding space, with smaller distances indicating greater semantic similarity.

At an initial stage, or early in the training process, the embedding model 404 may calculate distances 454 based on initial model parameters 440. As such, the calculated distances 454 may not accurately represent the semantic relationships present within the input document set 420. To train the embedding model 404 to accurately identify and pair similar semantic content, the training engine 418 may leverage the attention weights 434 extracted from the model 428. For example, the training engine 418 may formulate a contrastive loss function using the attention weights 434 and apply the contrastive loss function to the computed distances 454 generated by the embedding model 404. That is, the training engine 418 may formulate a contrastive loss function using the extracted attention weights 434 and apply this function to train the embedding model 404. To minimize the contrastive loss 438, the embedding model 404 may iteratively adjust one or more model parameters 440 through gradient descent optimization until convergence criteria are met and an output 456 is generated. Through this training process, the contrastive loss function guides the embedding model 404 to learn representations where semantically similar content (as identified by high attention weights in the model 428) is mapped to nearby points in the embedding space, while dissimilar content is mapped to distant points, effectively capturing the semantic relationships encoded in the model's 428 attention patterns.

The training process may be an iterative process. During each iteration, the training engine 418 may dynamically adjust the composition of the input document set 420 based on performance metrics from the previous round, potentially incorporating more challenging examples or focusing on specific semantic relationships that the embedding model 404 struggled to capture accurately. The training engine 418 may also implement an early stopping mechanism that monitors validation metrics across iterations to prevent overfitting, ensuring that the embedding model 404 maintains generalizability to unseen documents. Additionally, the training engine 418 may employ a curriculum learning approach, starting with simpler semantic relationships in early iterations before introducing more complex relationships in later iterations, thereby facilitating more efficient and effective training. The iterative process continues until either a maximum number of iterations is reached or the embedding model 404 demonstrates consistent performance across multiple evaluation metrics, including cosine similarity between embeddings 452, precision/recall on retrieval tasks, and alignment with human judgments of semantic similarity.

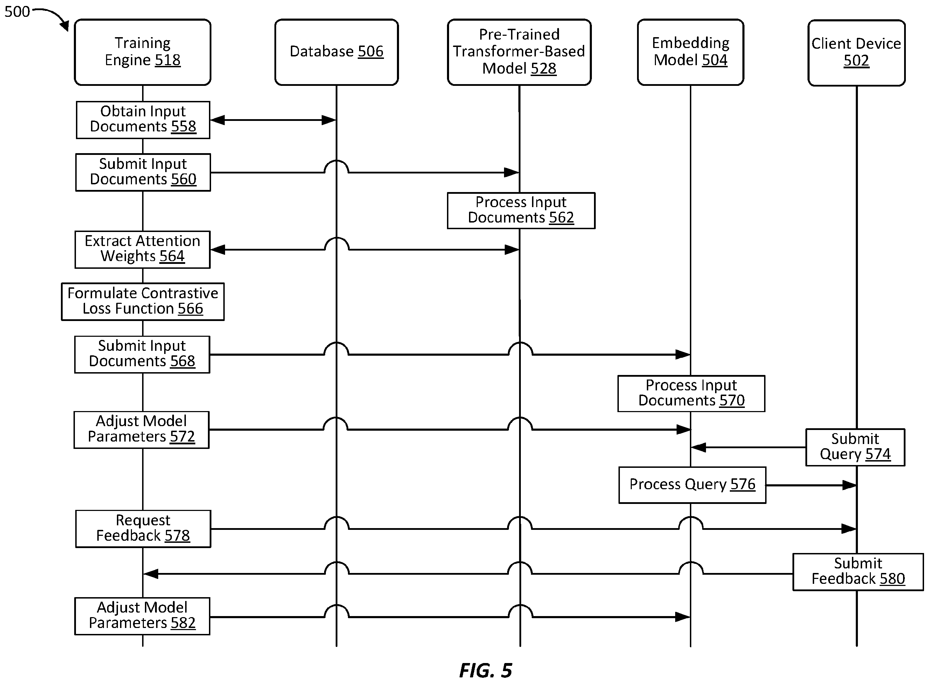

Referring now to **Figure 5****,** an example operational flow 500 providing one or more functions of the training engine 518 is illustrated, according to various embodiments herein. As shown, the flow 500 may initiate with a training engine 518, which may be the same or similar to the training engine 218, obtaining input documents (558). As illustrated, the training engine 518 may query a database 506, which may be the same or similar to the database 106, to select one or more input documents or content. As noted above, in some embodiments, the training engine 218 may curate the input documents to include one or more random or irrelevant documents to provide contrasting material for the training process. This inclusion of diverse content may serve multiple purposes in improving attention weight generation, such as creating a broader context for the pre-trained transformer-based model 528 to distinguish between relevant and irrelevant information, potentially leading to more pronounced attention patterns for domain-specific content. By incorporating this contrasting material, the training engine 218 may enhance the quality and discriminative power of the generated attention weights, potentially improving the subsequent training of the embedding model.

Once the input documents are selected, the training engine 518 submits the input documents as an input into a pre-trained transformer-based model 528, which may be the same or similar to the pre-trained transformer-based model 228 (560). Responsive to receiving the input documents, the pre-trained transformer-based model 228 may process the input documents (562). As noted above, during processing of the input documents, the pre-trained transformer-based model 228 generates attention weights indicating the semantic relationships between various concepts and text within the input documents. The training engine 518 extracts a subset of these attention weights from one or more intermediate layers within the pre-trained transformer-based model 228 (564). As noted above, the precise intermediate layer from which the attention weights are extracted may be tailored to identify primary semantic relationships between various concepts present within the input documents. That is, the specific intermediate layer from which the attention weights are extracted may influence the degree to which the primary semantic relationships present within the input documents are captured. To ensure that the extracted attention weights accurately and effectively reflect semantic relationships within the input documents, the training engine 518 may analyze the intermediate layers to identify those that accurately capture semantic connections relevant to the domain.

The training engine 518 may then formulate a contrastive loss function using the extracted attention weights (566). As noted above, the contrastive loss function guides the training process of the embedding model 504. That is, the contrastive loss function leverages the semantic relationships captured by the attention weights to define the objective for the embedding model's 504 learning. The contrastive loss function encourages the embedding model 504 to generate vector representations where semantically similar inputs (as identified by high attention weights) are mapped to nearby points in the embedding space, while dissimilar inputs are mapped to distant points.

Simultaneously or subsequent to extracting the attention weights, the training engine 518 may submit the input documents as an input into the embedding model 504 (568). Responsive to receiving the input documents, the embedding model 504 may process the input documents (570). During processing of the input documents, the embedding model 504 generates initial embeddings for the input documents. The training engine 518 may then compute similarity scores between these embeddings and compare them with the extracted attention weights. The training engine 518 may apply the contrastive loss function to these comparisons and iteratively adjust the model parameters of the embedding model 504 through gradient descent optimization until the contrastive loss function is minimized. By minimizing the contrastive loss function, the training engine 518 adjusts the model parameters of the embedding model 504 to generate embeddings whose similarity relationships accurately reflect the semantic relationships captured by the attention weights extracted from the pre-trained transformer-based model 528. This process enables the embedding model 504 to learn a more efficient representation of the semantic space without requiring the computational complexity of the full transformer architecture.

After the embedding model 504 undergoes an initial training process, the embedding model 504 may be deployed into a computing environment that enables user interactions. For example, the embedding model 504 may be deployed such that a user of a client device 502, which may be the same or similar to the client device 202, submits a search query to the embedding model 504 (574). Responsive to receiving the search query, the embedding model 504 may process the query (576) and return relevant documents to the client device 502. The training engine 518 may detect submission of the search query by the client device 502 and subsequently prompt the user to rate or indicate the relevance of each retrieved document to the search query (578). The client device 502 may responsively generate and submit this feedback to the training engine 518 (580). As noted above, the feedback may indicate the degree of relevance of each retrieved document to the user's search query. The training engine 518 may then fine-tune the embedding model 504 by adjusting one or more model parameters based on this feedback (582), in some implementations applying a weighting mechanism that prioritizes the user feedback over the extracted attention weights from the pre-trained transformer-based model 528.

Referring to **Figure 6,** Figure 6 illustrates a computing system 691 that may be used for providing or interacting with a training engine and related functions, as described herein. For example, the client device 102, 202, or other client devices may be or include the computing system 691, while in another example, any of the network devices or application service 101 may be or include the computing system 691. As illustrated, the computing system 691 includes a processing system 692 that includes a microprocessor and other circuitry that retrieves and executes software 695 from storage system 693. The processing system 692 may be implemented within a single processing device but may also be distributed across multiple processing devices or sub-systems that cooperate in executing program instructions. Examples of the processing system 692 include general purpose central processing units, graphical processing units, application specific processors, and logic devices, as well as any other type of processing device, combinations, or variations thereof.

The storage system 693 may comprise any computer-readable storage media or medium readable by processing system 692 and capable of storing software 695. The storage system 693 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations the storage system 693 may also include computer readable communication media over which at least some of the software 695 may be communicated internally or externally. The storage system 693 may be implemented as a single storage device but may also be implemented across multiple storage devices or sub-systems co-located or distributed relative to each other. The storage system 693 may comprise additional elements, such as a controller capable of communicating with the processing system 692 or possibly other systems.

The software 695 (including training engine 696) may be implemented in program instructions and among other functions may, when executed by the processing system 692, direct the processing system 692 to operate as described with respect to the various operational scenarios, sequences, and processes illustrated herein. For example, the software 695 may include program instructions for implementing a training engine and related functions, such as the method 300 or the operational flows 400 and/or 500 described in Figures 3-5, as described herein. In some cases, the software 695 may cause one or more features of the training engine 696 to provide or display respective components to a user via a user interface system 699 inoperable communication with a client device, such as the feedback 244 to the client device 202 via the user interface 112.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. The software 695 may include additional processes, programs, or components, such as operating system software, virtualization software, or other application software. The software 695 may also comprise firmware or some other form of machine-readable processing instructions executable by the processing system 692.

In general, the software 695 may, when loaded into the processing system 692 and executed, transform a suitable apparatus, system, or device (of which computing system 691 is representative) overall from a general-purpose computing system into a special-purpose computing system customized to generate features, functionality, and user experiences provided by the training engine. Indeed, encoding the software 695 on the storage system 693 may transform the physical structure of the storage system 693. The specific transformation of the physical structure may depend on various factors in different implementations of this description. Examples of such factors may include, but are not limited to, the technology used to implement the storage media of the storage system 693 and whether the computer-storage media are characterized as primary or secondary storage, as well as other factors.

For example, if the computer readable storage media are implemented as semiconductor-based memory, the software 695 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 697 may include communication connections and devices that allow for communication with other computing systems (not shown) over communication networks (not shown). Examples of connections and devices that together allow for inter-system communication may include network interface cards, antennas, power amplifiers, radio frequency (RF) circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between the computing system 691 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specifically-configured hardware, such as field-programmable gate array (FPGA), graphics processing units (GPUs), or neural processing units (NPUs) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), FPGAs, GPUs, NPUS, and state machines. Such processors may further comprise programmable electronic devices such as programmable logic controllers (PLCs), programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more non-transitory computer-readable media, which may store processor-executable instructions that, when executed by the processor, can cause the processor to perform methods according to this disclosure as carried out, or assisted, by a processor. Examples of which may include, but are not limited to, an electronic, optical, magnetic, or other storage device capable of providing a processor, such as the processor in a web server, with processor-executable instructions. Other examples of non-transitory computer-readable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code to carry out methods (or parts of methods) according to this disclosure.

Examples are described herein in the context of systems and methods for providing a training engine and related functions. Those of ordinary skill in the art will realize that the foregoing description is illustrative only and is not intended to be in any way limiting. Reference is made in detail to implementations of examples as illustrated in the accompanying drawings. The same reference indicators will be used throughout the drawings and the following description to refer to the same or like items.

Additionally, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure. In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

As used herein, the term "engine" refers to a computer-related entity, including but not limited to a component, module, or system. An engine may be implemented as software running on a general-purpose processor, hardware, firmware, or any combination thereof. For example, an engine can take the form of a process executing on a hardware processor, a hardware-based processor itself, an object, an executable, a thread of execution, a program, or even an entire computing device.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Systems and methods herein provide a training engine and its related functions. In an aspect, a training engine may access a pre-trained large language model (LLM) with multiple layers and provide a set of domain-specific documents to the LLM. Responsive to submitting the set of domain-specific documents to the LLM, the training engine may extract attention weights from one or more layers of the LLM. Then, using the attention weights, the training engine may train an embedding model that is configured to generate vector representations for input text in the specific domain. The attention weights, which may be extracted from one or more intermediate layers of the LLM, may be used as supervision signals to train the embedding model through contrastive learning, allowing the embedding model to learn semantic relationships between text segments based on the LLM's understanding of the domain.

Example 1 is a computing apparatus comprising: a computer-readable storage media comprising processor-executable instructions stored thereon; and a processor coupled to the computer-readable storage media and configured to execute the processor-executable instructions that, when executed by the processor, direct the computing apparatus to at least: provide a set of domain-specific documents to a pre-trained large language model (LLM), wherein the LLM comprises a plurality of layers; extract attention weights from one or more layers of the plurality of layers of the LLM; and train an embedding model using the extracted attention weights, wherein the embedding model is configured to generate vector representations for input text in the specific domain.

Example 2 is the computing apparatus of any previous or subsequent Example, wherein the processor-executable instructions to train the embedding model using the extracted attention weights, when executed by the processor, further direct the computing apparatus to: formulate a contrastive loss function based on the extracted attention weights; and adjust one or more model parameters of the embedding model to minimize the contrastive loss function, wherein the contrastive loss function is configured to minimize distances between embeddings of semantically related text as indicated by high attention weights, while maximizing distances between embeddings of unrelated text.

Example 3 is the computing apparatus of any previous or subsequent Example, wherein the processor-executable instructions to extract the attention weights from the one or more layers of the plurality of layers of the LLM, when executed by the processor, further direct the computing apparatus to: select one or more attention weights from the intermediate layer of the plurality of layers of the LLM, wherein the one or more layers are selected from layers between the 25th and 50th percentile of total layers of the LLM.

Example 4 is the computing apparatus of any previous or subsequent Example, wherein the processor-executable instructions to train an embedding model using the extracted attention weights, when executed by the processor, further direct the computing apparatus to: process the set of input documents using the embedding model to generate initial embeddings; and adjust one or more model parameters of the embedding model to minimize differences between similarity scores computed from the generated embeddings and the extracted attention weights, wherein the attention weights serve as supervision signals indicating semantic relationships between portions of the input documents.

Example 5 is the computing apparatus of any previous or subsequent Example, wherein the processor-executable instructions to extract attention weights from one or more layers of the plurality of layers of the LLM, when executed by the processor, further direct the computing apparatus to: analyze multi-head attention matrices within the one or more layers of the LLM; apply a threshold-based filtering to identify significant attention connections within the multi-head attention matrices, wherein the threshold is adaptively determined based on a statistical distribution of attention values distribution; and aggregate the attention weights using a weighted average across attention heads, wherein aggregation of the attention weights comprises normalization of the attention values to compensate for varying attention weight magnitudes.

Example 6 is the computing apparatus of any previous or subsequent Example, wherein the processor-executable instructions to provide the set of domain-specific documents to the LLM, when executed by the processor, further direct the computing apparatus to: preprocess the domain-specific documents by removing formatting artifacts, standardizing document structure, and extracting key sections based on document metadata to improve attention weight analysis by the LLM; and incorporate one or more random or irrelevant documents into the set of domain-specific documents to serve as negative samples.

Example 7 is a method comprising: obtaining, by a training engine, a set of input documents; processing the input documents using a large language model (LLM) to generate attention weights, wherein the LLM comprises a plurality of layers; extracting, by the training engine, the attention weights from an intermediate layer of the LLM, wherein the plurality of layers comprises the intermediate layer; and training, by the training engine, an embedding model using the extracted attention weights as supervision signals, wherein the embedding model learns to map input text to vector representations based on the attention weights extracted from the LLM.

Example 8 is the method of any previous or subsequent Example, wherein training, by the training engine, the embedding model comprises: formulating, by the training engine, a contrastive loss function based on the extracted attention weights; and adjusting, by the training engine, one or more model parameters of the embedding model to minimize the contrastive loss function, wherein the contrastive loss function is configured to minimize distances between embeddings of semantically related text as indicated by high attention weights, while maximizing distances between embeddings of unrelated text.

Example 9 is the method of any previous or subsequent Example, wherein extracting, by the training engine, the attention weights comprises: selecting, by the training engine, one or more attention weights from the intermediate layer of the plurality of layers of the LLM, wherein the intermediate layer is selected from layers between the 25th and 50th percentile of total layers of the LLM.

Example 10 is the method of any previous or subsequent Example, wherein the method further comprises: identifying, by the training engine, one or more random or irrelevant documents to supplement the set of input documents, wherein the one or more random or irrelevant documents comprise unrelated text segments selected using one or more of a random sampling or hard negative mining techniques, with the hard negative samples being identified through cosine similarity thresholding in the embedding space to identify challenging examples that are syntactically similar but semantically distinct; and incorporating, by the training engine, the one or more random or irrelevant documents into the set of input documents to serve as negative samples during the training of the embedding model.

Example 11 is the method of any previous or subsequent Example, wherein the method further comprises: collecting, by the training engine, user feedback on the relevance of documents retrieved using the trained embedding model; and fine-tuning, by the training engine, the embedding model based on the user feedback.

Example 12 is the method of any previous or subsequent Example, wherein fine-tuning, by the training engine, the embedding model comprises: adjusting, by the training engine, one or more model parameters to more heavily weight user feedback compared to the attention weight retrieved from the LLM.

Example 13 is the method of any previous or subsequent Example, wherein training, by the training engine, the embedding model using the extracted attention weights as supervision signals comprises: incorporating, by the training engine, the attention weights directly into a loss function, wherein the loss function weights the importance of an input text segment within the input documents according to a respective attention weight received from the LLM.

Example 14 is the method of any previous or subsequent Example, wherein extracting, by the training engine, the attention weights from the intermediate layer of the LLM further comprises: analyzing, by the training engine, multi-head attention matrices generated within the intermediate layer of the LLM, wherein the multi-head attention matrices comprise the attention weights representing contextual relationships among token representations derived from the set of input documents; applying, by the training engine, a threshold-based filtering operation to identify primary attention relationships within the multi-head attention matrices, wherein the threshold-based filtering operation is adaptively determined based on a statistical characterization of the attention weights; and aggregating, by the training engine, the attention weights across the multi-head attention matrices to using a weighted combination.

Example 15 is a computer readable storage media comprising processor-executable instructions configured to cause a processor to: select, by a training engine, a subset of documents from a corpus; submit, by the training engine, the subset of documents to a large language model (LLM), wherein the LLM comprises a plurality of layers; analyze, by the training engine, attention patterns in the LLM's processing of the documents; generate, by the training engine, synthetic training data based on the analyzed attention patterns; and train, by the training engine, a retrieval embedding model using the synthetic training data, wherein the retrieval embedding model requires less computational resources than the LLM.

Example 16 is the computer readable storage media of any previous or subsequent Example, wherein the processor-executable instructions to generate, by the training engine, the synthetic training data cause the processor to further execute processor-executable instructions stored in the computer readable storage media to: identify, by the training engine, pairs of text segments from the subset of documents with high mutual attention weights based on the analyzed attention patterns; and labeling, by the training engine, the identified pairs as semantically related for training the retrieval embedding model.

Example 17 is the computer readable storage media of any previous or subsequent Example, wherein the processor-executable instructions to analyze, by the training engine, the attention patterns in the LLM's processing of the documents cause the processor to further execute processor-executable instructions stored in the computer readable storage media to: extract, by the training engine, a plurality of attention weights from an intermediate layer of the plurality of layers of the LLM, wherein the intermediate layer is selected from layers between the 10th and 30th percentile of total layers of the LLM.

Example 18 is the computer readable storage media of any previous or subsequent Example, wherein the processor-executable instructions to train, by the training engine, the retrieval embedding model using the synthetic training data cause the processor to further execute processor-executable instructions stored in the computer readable storage media to: formulate, by the training engine, a contrastive loss function based on the synthetic training data, wherein the contrastive loss function incorporates a temperature parameter that controls the sensitivity of the retrieval embedding model to hard negative examples; and adjust, by the training engine, one or more model parameters of the retrieval embedding model to minimize the contrastive loss function using a stochastic gradient descent optimizer with a cosine learning rate schedule and gradient clipping to prevent exploding gradients during training.

Example 19 is the computer readable storage media of any previous or subsequent Example, wherein the processor-executable instructions to train, by the training engine, the retrieval embedding model using the synthetic training data cause the processor to further execute processor-executable instructions stored in the computer readable storage media to: process the subset of documents using the retrieval embedding model to generate initial embeddings; and adjust, by the training engine, one or more model parameters of the embedding model to minimize differences between similarity scores computed from the generated embeddings and the extracted attention weights, wherein the attention weights serve as supervision signals indicating semantic relationships between portions of the input documents.

Example 20 is the computer readable storage media of any previous Example, wherein the processor-executable instructions cause the processor to further execute processor-executable instructions stored in the computer readable storage media to: responsive to training the retrieval embedding model, detect, by the training engine, a search query submitted to the retrieval embedding model from a user; present, by the training engine, one or more retrieved documents retrieved by the retrieval embedding model responsive to the search query, wherein the retrieved documents are distinct from the subset of documents used during the training of the embedding model; prompt, by the training engine, the user to rate or indicate the relevance of each retrieved document to the search query; collect, by the training engine, user feedback on the relevance of the retrieved documents using the retrieval embedding model as trained; and fine-tune, by the training engine, the retrieval embedding model based on the user feedback, wherein fine-tuning comprises adjusting model parameters to more heavily weight user feedback compared to the synthetic training data.

## Claims

1. A computing apparatus (691) comprising:
a computer-readable storage media (693) comprising processor-executable instructions (695) stored thereon; and
a processor (692) coupled to the computer-readable storage media (693) and configured to execute the processor-executable instructions (695) that, when executed by the processor (692), direct the computing apparatus (691) to at least:
provide a set of domain-specific documents (220) to a pre-trained large language model (LLM) (228), wherein the LLM (228) comprises a plurality of layers;
extract attention weights (234) from one or more layers (230) of the plurality of layers of the LLM (228); and
train an embedding model (204) using the extracted attention weights (234), wherein the embedding model (204) is configured to generate vector representations for input text in the specific domain.

2. The computing apparatus (691) of claim 1, wherein the processor-executable instructions (695) to train the embedding model (204) using the extracted attention weights (234), when executed by the processor (692), further direct the computing apparatus (691) to:
formulate a contrastive loss function (238) based on the extracted attention weights (234); and adjust one or more model parameters (240) of the embedding model (204) to minimize the contrastive loss function (238), wherein the contrastive loss function (238) is configured to minimize distances between embeddings (454) of semantically related text as indicated by high attention weights (234), while maximizing distances between embeddings (454) of unrelated text; or
process the set of input documents (220) using the embedding model (204) to generate initial embeddings; and adjust one or more model parameters (240) of the embedding model (204) to minimize differences between similarity scores computed from the generated embeddings and the extracted attention weights (234), wherein the attention weights (234) serve as supervision signals indicating semantic relationships between portions of the input documents (220).

3. The computing apparatus (691) of any preceding claim, wherein the processor-executable instructions (695) to extract the attention weights (234) from the one or more layers (230) of the plurality of layers of the LLM (228), when executed by the processor (692), further direct the computing apparatus (691) to:
select one or more attention weights (234) from an intermediate layer (430A-N) of the plurality of layers of the LLM (228), wherein the one or more layers (230) are selected from layers between the 25th and 50th percentile of total layers of the LLM (228); or
analyze multi-head attention matrices within the one or more layers (230) of the LLM (228); apply a threshold-based filtering to identify significant attention connections within the multi-head attention matrices, wherein the threshold is adaptively determined based on a statistical distribution of attention values distribution; and aggregate the attention weights (234) using a weighted average across attention heads, wherein aggregation of the attention weights (234) comprises normalization of the attention values to compensate for varying attention weight magnitudes.

4. The computing apparatus (691) of any preceding claim, wherein the processor-executable instructions (695) to provide the set of domain-specific documents (220) to the LLM (228), when executed by the processor (692), further direct the computing apparatus (691) to:
preprocess the domain-specific documents (220) by removing formatting artifacts, standardizing document structure, and extracting key sections based on document metadata to improve attention weight analysis by the LLM (228); and
incorporate one or more random or irrelevant documents (210A-N) to the set of domain-specific documents (220) to serve as negative samples.

5. A method comprising:
obtaining, by a training engine (218), a set of input documents (220);
processing the input documents (220) using a large language model (LLM) to generate attention weights (234), wherein the LLM (228) comprises a plurality of layers;
extracting, by the training engine (218), the attention weights (234) from an intermediate layer (430A-N) of the LLM (228), wherein the plurality of layers comprises the intermediate layer (430A-N); and
training, by the training engine (218), an embedding model (204) using the extracted attention weights (234) as supervision signals, wherein the embedding model (204) learns to map input text to vector representations based on the attention weights (234) extracted from the LLM (228).

6. The method of claim 5, wherein training, by the training engine (218), the embedding model (204) comprises:
formulating, by the training engine (218), a contrastive loss function (238) based on the extracted attention weights (234); and
adjusting, by the training engine (218), one or more model parameters (240) of the embedding model (204) to minimize the contrastive loss function (238), wherein the contrastive loss function (238) is configured to minimize distances between embeddings (454) of semantically related text as indicated by high attention weights (234), while maximizing distances between embeddings (454) of unrelated text.

7. The method of any of claims 5 to 6, wherein extracting, by the training engine (218), the attention weights (234) comprises:
selecting, by the training engine (218), one or more attention weights (234) from the intermediate layer (430A-N) of the plurality of layers of the LLM (228), wherein the intermediate layer (430A-N) is selected from layers between the 25th and 50th percentile of total layers of the LLM (228); or
analyzing, by the training engine (218), multi-head attention matrices generated within the intermediate layer (430A-N) of the LLM (228), wherein the multi-head attention matrices comprise the attention weights (234) representing contextual relationships among token representations derived from the set of input documents (220); applying, by the training engine (218), a threshold-based filtering operation to identify primary attention relationships within the multi-head attention matrices, wherein the threshold-based filtering operation is adaptively determined based on a statistical characterization of the attention weights (234); and aggregating, by the training engine (218), the attention weights (234) across the multi-head attention matrices to using a weighted combination.

8. The method of any of claims 5 to 7, wherein the method further comprises:
identifying, by the training engine (218), one or more random or irrelevant documents (210A-N) to supplement the set of input documents (220), wherein the one or more random or irrelevant documents (210A-N) comprise unrelated text segments selected using one or more of a random sampling or hard negative mining techniques, with the hard negative samples being identified through cosine similarity thresholding in the embedding space to identify challenging examples that are syntactically similar but semantically distinct; and
incorporating, by the training engine (218), the one or more random or irrelevant documents (210A-N) into the set of input documents (220) to serve as negative samples during the training of the embedding model (204).

9. The method of any of claims 5 to 8, wherein the method further comprises:
collecting, by the training engine (218), user feedback (244) on the relevance of documents (220) retrieved using the trained embedding model (204); and
fine-tuning, by the training engine (218), the embedding model (204) based on the user feedback (244), and optionally, wherein fine-tuning, by the training engine (218), the embedding model (204) comprises adjusting, by the training engine (218), one or more model parameters (240) to more heavily weight user feedback (244) compared to the attention weight (234) retrieved from the LLM (228).

10. The method of any of claims 5 to 9, wherein training, by the training engine (218), the embedding model (204) using the extracted attention weights (234) as supervision signals comprises:
incorporating, by the training engine (218), the attention weights (234) directly into a loss function (238), wherein the loss function (238) weights the importance of an input text segment within the input documents (220) according to a respective attention weight received from the LLM (228).

11. A computer readable storage media (693) comprising processor-executable instructions (695) configured to cause a processor (692) to:
select, by a training engine (218), a subset of documents (220) from a corpus;
submit, by the training engine (218), the subset of documents (220) to a large language model (LLM (228)), wherein the LLM (228) comprises a plurality of layers;
analyze, by the training engine (218), attention patterns in the LLM's (228) processing of the documents (220);
generate, by the training engine (218), synthetic training data based on the analyzed attention patterns; and
train, by the training engine (218), a retrieval embedding model (204) using the synthetic training data, wherein the retrieval embedding model (204) requires less computational resources than the LLM (228).

12. The computer readable storage media (693) of claim 11, wherein the processor-executable instructions (695) to generate, by the training engine (218), the synthetic training data cause the processor (692) to further execute processor-executable instructions (695) stored in the computer readable storage media (693) to:
identify, by the training engine (218), pairs of text segments from the subset of documents (220) with high mutual attention weights (234) based on the analyzed attention patterns; and
labeling, by the training engine (218), the identified pairs as semantically related for training the retrieval embedding model (204).

13. The computer readable storage media (693) of any of claims 11 to 12, wherein the processor-executable instructions (695) to analyze, by the training engine (218), the attention patterns in the LLM (228)'s processing of the documents (220) cause the processor (692) to further execute processor-executable instructions (695) stored in the computer readable storage media (693) to:
extract, by the training engine (218), a plurality of attention weights (234) from an intermediate layer (430A-N) of the plurality of layers of the LLM (228), wherein the intermediate layer (430A-N) is selected from layers between the 10th and 30th percentile of total layers of the LLM (228).

14. The computer readable storage media (693) of any of claims 11 to 13, wherein the processor-executable instructions (695) to train, by the training engine (218), the retrieval embedding model (204) using the synthetic training data cause the processor (692) to further execute processor-executable instructions (695) stored in the computer readable storage media (693) to:
formulate, by the training engine (218), a contrastive loss function (238) based on the synthetic training data, wherein the contrastive loss function (238) incorporates a temperature parameter that controls the sensitivity of the retrieval embedding model (204) to hard negative examples; and adjust, by the training engine (218), one or more model parameters (240) of the retrieval embedding model (204) to minimize the contrastive loss function (238) using a stochastic gradient descent optimizer with a cosine learning rate schedule and gradient clipping to prevent exploding gradients during training; or
process the subset of documents (220) using the retrieval embedding model (204) to generate initial embeddings; and adjust, by the training engine (218), one or more model parameters (240) of the embedding model (204) to minimize differences between similarity scores computed from the generated embeddings and the extracted attention weights (234), wherein the attention weights (234) serve as supervision signals indicating semantic relationships between portions of the input documents (220).

15. The computer readable storage media (693) of any of claims 11-14, wherein the processor-executable instructions (695) cause the processor (692) to further execute processor-executable instructions (695) stored in the computer readable storage media (693) to:
responsive to training the retrieval embedding model (204), detect, by the training engine (218), a search query submitted to the retrieval embedding model (204) from a user;
present, by the training engine (218), one or more retrieved documents (220) retrieved by the retrieval embedding model (204) responsive to the search query, wherein the retrieved documents (220) are distinct from the subset of documents (220) used during the training of the embedding model (204);
prompt, by the training engine (218), the user to rate or indicate the relevance of each retrieved document to the search query;
collect, by the training engine (218), user feedback (244) on the relevance of the retrieved documents (220) using the retrieval embedding model (204) as trained; and
fine-tune, by the training engine (218), the retrieval embedding model (204) based on the user feedback (244), wherein fine-tuning comprises adjusting model parameters (240) to more heavily weight user feedback (244) compared to the synthetic training data.
